# EUROPÄISCHE PATENTSCHRIFT

(11) **EP 1 795 796 B1**
(45) Veröffentlichungstag und Bekanntmachung des Hinweises auf die Patenterteilung: **22.04.2009**
(21) Anmeldenummer: 05292659.9
(22) Anmeldetag: 09.12.2005
(51) Int. Cl.: F16L 59/065, F16L 59/14

(54) **Leitungsrohr für den Transport von tiefgekühlten Medien**
Conduit for the transport of cryogenic fluids
Tuyau de canalisation pour le transport de fluides cryogéniques

(43) Veröffentlichungstag der Anmeldung: 13.06.2007
(73) Patentinhaber: Nexans, 75008 Paris (FR)
(72) Erfinder: Lange, Stephan, 30900 Wedemark (DE); Di Palma, Michele, 31832 Springe (DE); Frohne, Christian Dr., 30657 Hannover (DE); Schippl, Klaus, 30659 Hannover (DE); Merten, Thomas, 30159 Hannover (DE)
(74) Vertreter: Döring, Roger

(56) Entgegenhaltungen:
- EP-A- 1 363 062
- EP-A- 1 586 715
- DE-A1- 19 602 940

## Beschreibung

Die Erfindung betrifft ein Leitungsrohr für den Transport von tiefgekühlten Medien gemäß dem Oberbegriff des Patentanspruchs. Ein derartiges Leitungsrohr geht aus der EP 1 363 062 A1 hervor.

Die EP 1 363 062 A1 beschreibt ein Leitungsrohr für den Transport von tiefgekühlten Medien, welches aus mindestens zwei konzentrisch und mit Abstand zueinander angeordneten Metallrohren besteht. In dem Ringspalt zwischen den Metallrohren ist eine Isolierungsschicht angeordnet und der Ringspalt ist evakuiert. Die Metallrohre sind nach einer vorteilhaften Ausgestaltung des bekannten Leitungsrohrs längsnahtgeschweißte und gewellte Edelstahlrohre. Aufgrund der Wellung lassen sich Leitungsrohre der beschriebenen Art in großen Längen herstellen. Die Isolierungsschicht besteht aus wechselweise übereinander angeordneten Lagen aus Isoliermaterial und einem Material mit reflektierender Oberfläche. Bevorzugt werden Glasfaservliese und Aluminiumfolien. Eine Isolierung aus diesen Materialien in Kombination mit einem Hochvakuum wird in der Kryotechnik als Superisolierung bezeichnet. Das bekannte Leitungsrohr findet bevorzugt Anwendung als Transferleitung für verflüssigte Gase, aber auch als Kryostat für Supraleiterkabel.

Die bekannten Leitungsrohre zeichnen sich durch eine hohe Wirtschaftlichkeit aus, da aufgrund der herstellbaren großen Länge gegenüber Leitungen aus Glattrohren eine Vielzahl von Anschlußverbindungen entbehrlich ist. Aufgrund der Flexibilität können die Leitungen auch mit engen Radien verlegt werden.

Ein Nachteil der bekannten Leitungen besteht darin, daß aufgrund der großen Länge eine Evakuierung von den Enden her sehr zeitaufwendig ist.

Gemäß der bereits erwähnten EP 1 363 062 A1 ist daher das außen liegende Metallrohr in vorbestimmten Abständen aufgetrennt. In jeder dadurch entstandenen Öffnung ist ein Pumpstutzen vakuumdicht mit dem äußeren Metallrohr verschweißt. Hierzu werden auf die beiden Enden des äußeren Metallrohres im Bereich einer Öffnung Metallringhälften aufgelegt und mit den Enden des äußeren Metallrohres verschweißt. Auf die Metallringhälften werden dann Halbschalen aus einem glattwandigen Metallrohr aufgelegt und mit den Metallringhälften sowie an ihren Längskanten miteinander verschweißt. Eine der Halbschalen weist einen Pumpstutzen für eine Vakuumpumpe auf. Nachteilig bei dieser Konstruktion ist, daß die Metallringhälften sowie der Pumpstutzen aus der Umfangsfläche des äußeren Metallrohres herausragen. Dadurch ist es nicht möglich, das Leitungsrohr in enge Kanäle einzuziehen.

Ähnlich nachteilige Konstruktionen mit einem vorstehenden Pumpstutzen sind in der DE 31 42 702 A1, der US 6 257 282 B1, der WO 01/27514A1 sowie der US 4 046 407 B1 beschrieben.

Aus der DE 196 02 940 A1 ist ein Bauteil sowie eine Vorrichtung zum Verschließen einer Zugangsöffnung desselben bekannt, die gasdicht durch eine Verschlußplatte abdeckbar ist. Der Innenraum des Bauteils ist gegenüber der Umgebung evakuiert. Die Zugangsöffnung ist von einem Ringflansch umgeben, der im Bereich des Innenraums an einer Seitenwandung des Bauteils anliegt. Der Ringflansch weist eine Auflagefläche auf, in welcher eine Ringnut mit einer Dichtung vorgesehen ist. An der Verschlußplatte ist ein Stehbolzen angebracht, der zur Führung der Verschlußplatte in einer Schleuse zum Einbringen des Vakuums in das Bauteil und zum Andrücken der Verschlußplatte auf die Dichtung dient.

Die EP-A-1 586 715 beschreibt eine evakuierbare Bodenplatte für Kühl- und Frischhaltezellen mit einer begehbaren Platte und einer Bodenauflageplatte, die seitlich mit einem Seitenrandprofil abgedichtet sind. Zur Evakuierung des Innenraums der Bodenplatte ist eine mit einem Deckel verschließbare Öffnung in einer der beiden Platten angebracht. Die Öffnung ist als eine in den Innenraum hineinragende Eintiefung ausgebildet, in welcher in einer ersten Ausführungsform ein mit dem Innenraum in Verbindung stehendes Rückschlagventil mit Anschluß für eine Absaugleitung angeordnet ist. In einer weiteren Ausführungsform ist in der Eintiefung der Bodenplatte ein Kegelventilsitz eines Kegelventils ausgeformt, in dem ein federbelasteter Schließkegel angeordnet ist, welcher eine Absaugöffnung des Kegelventils verschließt.

Der Erfindung liegt die Aufgabe zugrunde, ein Leitungsrohr der eingangs erwähnten Art bereitzustellen, welches auch in großen Längen in engen Kabelkanälen verlegt und schnell und einfach nachevakuiert werden kann, wenn das Vakuum sich durch eventuelle Leckstellen verschlechtert haben sollte.

Diese Aufgabe wird entsprechend den kennzeichnenden Merkmalen des Patenanspruchs gelöst.

Der wesentliche Vorteil dieses Leitungsrohrs ist darin zu sehen, daß keine vorspringenden Teile vorhanden sind, welche beim Einziehen desselben in einen Kabelkanal hinderlich sind. Der beim Stand der Technik vorgesehene nach außen vorspringende Pumpstutzen wird durch einen Adapter ersetzt, der erst in dem Fall angebracht wird, wenn nachgepumpt werden muß. Der Adapter wird dann mit dem Ventilkörper vakuumdicht verschraubt und eine an sich bekannte Gasschleuse löst eine in den Ventilkörper eingeschraubte Verschlußschraube und schafft somit einen Zugang zum Ringraum.

Ein Ausführungsbeispiel des Erfindungsgegenstandes ist in den Zeichnungen dargestellt.

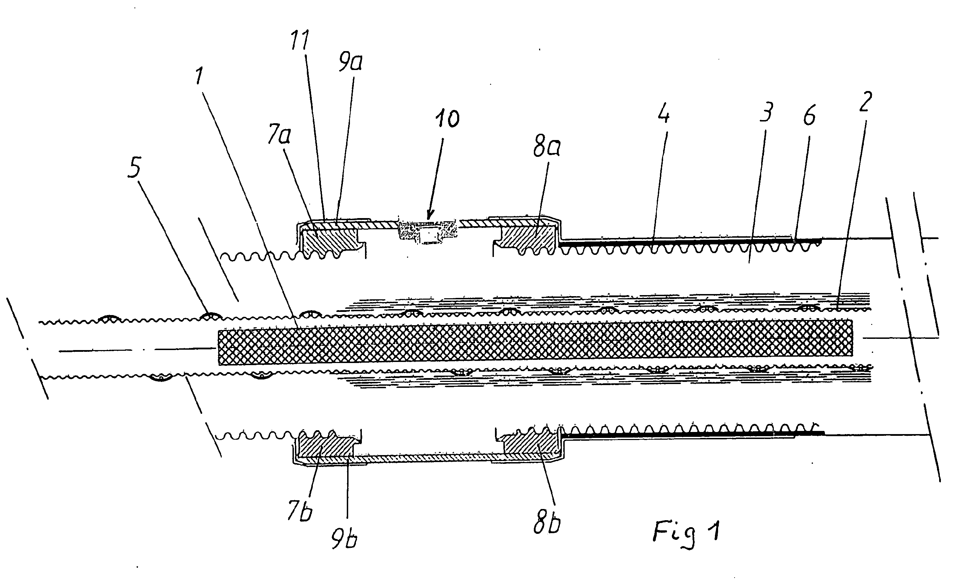

Die Figuren 1 bis 5 zeigen in schematischer Darstellung als Ausführungsbeispiel ein Supraleiterkabel als Leitungsrohr.

Fig. 1 zeigt einen Schnitt durch eine seitliche Ansicht eines Supraleiterkabels, welches aus einer supraleitenden Kabelseele 1 und einem dieselbe umgebenden "cryogenic envelope" besteht. Der "cryogene envelope" ist als ein Leitungsrohr aus einem Innenrohr 2, einer Superisolierung als Isolierungsschicht 3 sowie einem Außenrohr 4 ausgebildet. Das Innenrohr 2 ist ein längsnahtgeschweißtes, gewelltes Metallrohr aus austenitischem Stahl. Auf das Innenrohr 2 ist ein Abstandshalter 5 schraubenlinienförmig aufgewickelt. Auf dem Innenrohr 2 und dem Abstandhalter 5 ist die Isolierungsschicht 3 angeordnet, die aus wechselweise aufgebrachten Lagen aus reflektierenden Metallfolien z. B. mit Aluminium beschichteten Kunststofffolien und Folien aus nicht wärmeleitendem Material z. B. Glasfaservlies, besteht.

Das Außenrohr 4 ist ebenfalls ein längsnahtgeschweißtes, gewelltes Metallrohr aus austenitischem Stahl, welches von einem Kunststoffmantel 6 umgeben sein kann. Das dargestellte Supraleiterkabel kann auf in der Kabeltechnik übliche Weise kontinuierlich werksseitig in großen Längen hergestellt werden, wobei die maximale Länge durch das Fassungsvermögen der Transportmittel begrenzt ist, z. B. durch die Größe der Kabelspule.

Um den Evakuierungsprozeß sowohl direkt nach der Fertigung als auch nach der Verlegung des Leitungsrohrs zu beschleunigen oder überhaupt zu ermöglichen, sind in vorbestimmten Abständen von z. B. 100 m der Kunststoffmantel 6 und das Außenrohr 4 über eine begrenzte Länge entfernt.

Auf die dadurch entstandenen Enden des Außenrohres 4 werden je zwei metallische Halbschalen 7a, 7b und 8a, 8b aufgesetzt und an ihren Trennfugen sowie an ihren einander zugekehrten Stirnseiten mit den Enden des Außenrohres 4 vakuumdicht verschweißt. Die Halbschalen 7a, 7b und 8a, 8b bestehen ebenfalls aus austenitischem Stahl. Wie aus Fig. 1 erkennbar ist, weisen die Halbschalen 7a, 7b und 8a, 8b an ihren dem Außenrohr 4 zugekehrten Oberflächen eine der Form der Wellung des Außenrohres 4 angepaßte Profilierung auf, welche die Halbschalen bzw. die aus den Halbschalen 7a, 7b und 8a, 8b geschweißten Ringe formschlüssig mit dem Außenrohr 4 verbinden und somit die Schweißnaht entlasten. Über die aus den Halbschalen 7a, 7b und 8a, 8b gebildeten Ringe werden zwei Halbschalen 9a und 9b, die aus Blechabschnitten aus austenitischen Stahl hergestellt sind, herumgelegt und endseitig mit den Halbschalen 7a, 7b und 8a, 8b sowie an ihren Trennkanten vakuumdicht miteinander verschweißt. Die Halbschale 9a weist einen Ventilkörper 10 auf, an den eine Vakuumpumpe anschließbar ist.

An Stelle der auf das Außenrohr 4 aufgelegten Halbschalen 7a, 7b, 8a und 8b können auch Halbschalen verwendet werden, die nach dem Verschweißen der Längsnähte in das Außenrohr 4 eingeschraubt werden.

Über die Halbschalen 9a, 9b und den Kunststoffmantel 6 kann noch eine Schutzmanschette 11 herumgelegt werden.

Der zwischen dem Innenrohr 2 und dem Außenrohr 4 befindliche Ringspalt, der teilweise mit der Isolierungsschicht 3 ausgefüllt ist, ist an beiden Enden einer Kabellänge vakuumdicht nach außen abgeschottet.

Nach Fertigstellung dieser Vorarbeiten werden an die jeweiligen Ventilkörper 10 nicht dargestellte Vakuumpumpen angeschlossen, welche den Ringspalt evakuieren.

Bei einer Kabellänge von ca. 500 m sind im Abstand von jeweils 100 m vier Ventilkörper 10 vorgesehen. Um Restgase, die nach dem Evakuieren in dem Ringspalt frei werden, abzufangen, kann in den Ringspalt ein Gettermaterial eingebracht werden, vorzugsweise bei der Herstellung der Pumpanschlüsse.

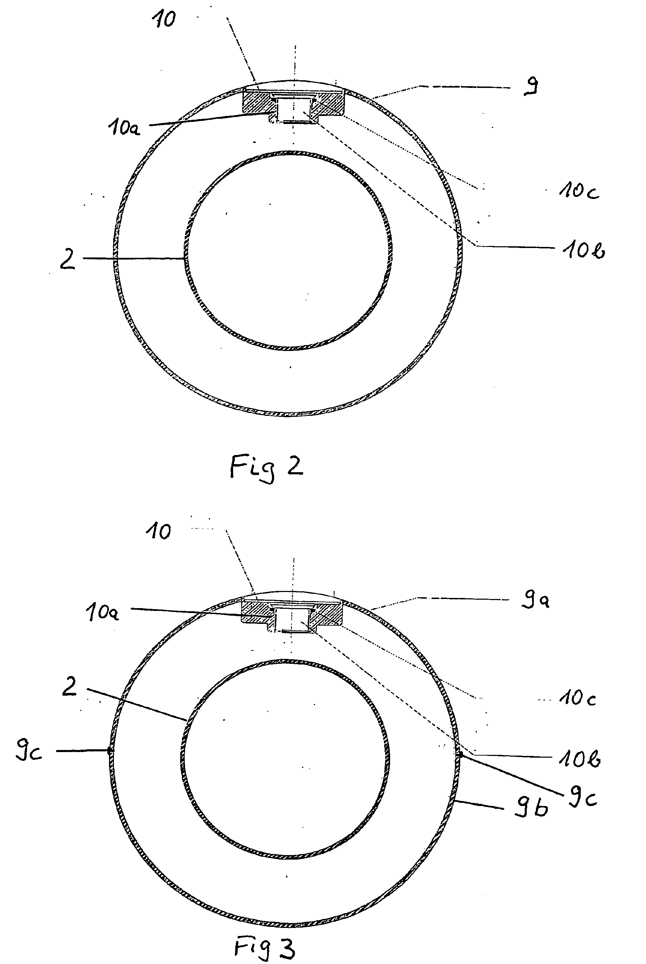

Die Fig. 2 und 3 zeigen einen Schnitt durch den Bereich, in welchem das Außenrohr 4 des Leitungsrohres entfernt ist. In eine Bohrung in einem glattwandigen Metallrohr 9, welches an seinen Enden mit den Enden des Außenrohres 4 verschweißt ist, ist der Ventilkörper 10 eingeschweißt. Er ragt in den Innenraum des glattwandigen Metallrohres 9 hinein und ist an seiner nach außen weisenden Oberfläche der Rundung des Metallrohres 9 angepaßt, so daß die nach außen weisende Oberfläche des Ventilkörpers 10 bündig mit der Mantelfläche des Metallrohres 9 ist.

Der Ventilkörper 10 weist eine Gewindebohrung 10a auf, in welche eine Verschlußschraube 10b vakuumdicht eingeschraubt ist. Ein Dichtring 10c sorgt für die erforderliche Abdichtung.

Die in Fig. 2 dargestellte Ausführung ist für die Anbringung am Ende des Leitungsrohres geeignet.

In Fig. 3 ist die gleiche Ausführung dargestellt. Das glattwandige Metallrohr 9 ist hier jedoch aus den beiden Halbschalen 9a und 9b gebildet, die an ihren Längsnähten 9c miteinander verschweißt sind. Diese Ausführung wird zwischen den beiden Enden des Leitungsrohres eingesetzt.

Die in den Fig. 1 bis 3 dargestellte Ausführung zeigt den Zustand des Leitungsrohres nach dem Evakuieren. Da keine wesentlichen äußeren Durchmesservergrößerung vorhanden sind, kann das Leitungsrohr in großen Längen in vorhandene Kabelkanäle eingezogen werden. Von besonderem Vorteil ist es, wenn die Bereiche, in denen das Außenrohr 4 entfernt ist, von außen zugänglich sind, d. h. wenn dort ein sogenanntes Mannloch bzw. ein Kabelschacht vorgesehen ist.

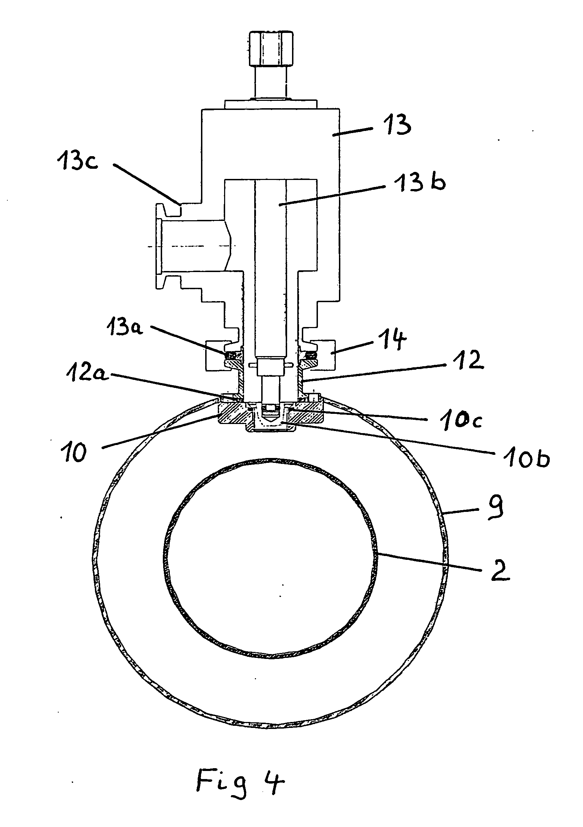

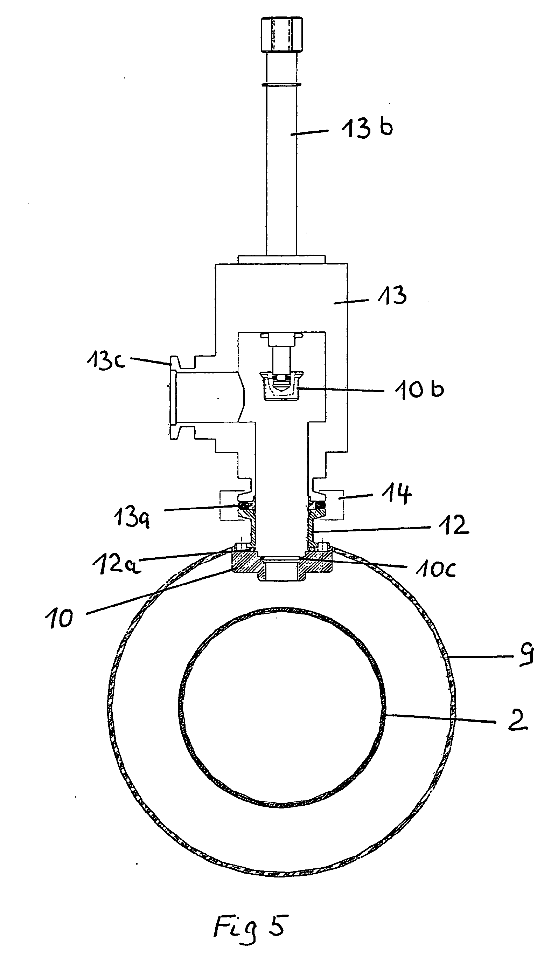

Im Folgenden wird der Vorgang des Evakuierens bzw. Nachevakuierens anhand der Fig. 4 und 5 näher beschrieben.

Zunächst wird ein Adapter 12 auf den Ventilkörper 10 aufgesetzt und mittels nicht dargestellter Schraubbolzen, die in entsprechende, nicht dargestellte Gewindebohrungen im Ventilkörper 10 eingeschraubt werden, mit dem Ventilkörper 10 vakuumdicht verbunden. Ein Dichtring 12a sorgt für die erforderliche Dichtigkeit. Sodann wird eine an sich bekannte Gasschleuse 13 mittels eines Spannringes 14 mit dem Adapter 12 vakuumdicht verbunden. Ein Dichtring 13a liegt an der Nahtstelle zwischen Adapter 12 und Gasschleuse 13.

Ein drehbar im Gehäuse der Gasschleuse 13 gelagerter Bolzen 13b wird abgesenkt. Er dringt mit seinem dem Ventilkörper 10 zugekehrten Ende in eine nicht näher bezeichnete Öffnung in der Verschlußschraube 10b ein und löst diese durch Drehen.

Wie in Fig. 5 dargestellt wird der Bolzen 13b nach dem Lösen der Verschlußschraube 10b gemeinsam mit dieser angehoben, wodurch der Zugang zum Ringspalt zwischen Innenrohr 2 und Außenrohr einen Flansch 13c der Gasschleuse 13 angeschlossen wird, den Evakuierungsvorgang in Gang setzen.

Nach Erzeugung des erforderlichen Vakuums fährt der Bolzen 13b mit der Verschlußschraube 10b abwärts und schraubt diese wieder in die Gewindebohrung 10a des Ventilkörpers 10 ein.

Im Falle des Nachevakuierens ist es erforderlich, den Innenraum der Gasschleuse 13 vor dem Herausschrauben der Verschlußschraube 10b zu evakuieren.

Ein Entfernen des Adapters 12 kann unterbleiben, wenn der Evakuierungsprozeß bei einem bereits verlegten Leitungsrohr vorgenommen wurde.

## Patentansprüche

1. Leitungsrohr für den Transport von tiefgekühlten Medien, bestehend aus mindestens zwei konzentrisch und im Abstand zueinander angeordneten gewellten Metallrohren (2,4), die einen Ringspalt zwischen sich einschließen, in dem eine Isolierungsschicht (3) angeordnet ist und der evakuiert ist, bei welchem in das außen liegende Metallrohr (4) ein glattwandiges Metallrohr (9) vakuumdicht eingeschweißt ist, in dem ein zum Anschluß einer Vakuumpumpe geeignetes Bauteil vakuumdicht angebracht ist,
**dadurch gekennzeichnet,**
- **daß** das Bauteil zum Anschließen der Vakuumpumpe ein Verschlußventil mit einem Ventilkörper (10) ist, welcher in den Innenraum des glattwandigen Metallrohrs (9) hineinragt, mit demselben vakuumdicht verschweißt ist und bündig mit der äußeren Mantelfläche desselben abschließt,
- **daß** der Ventilkörper (10) eine Gewindebohrung (10a) aufweist, die im Betriebszustand des Leitungsrohrs durch eine Verschlußschraube (10b) vakuumdicht verschlossen ist, und
- **daß** der Ventilkörper (10) Gewindebohrungen zum vakuumdichten Anschließen eines Adapters (12) mittels Schraubbolzen aufweist, der zum vakuumdichten Anschließen einer Gasschleuse (13) dient, an welche die Vakuumpumpe anschließbar ist.

## Claims

1. Line pipe for the transport of deep-frozen media, comprising at least two corrugated metal tubes (2,4) arranged concentrically and at a distance from one another, an insulation layer (3) being arranged in the annular gap between the two metal tubes (2,4), the annular gap being evacuated, wherein a smooth-walled metal tube (9) is welded, vacuum-tight, to the outer metal tube (4), which comprises an element to which a vacuum pump is connectable in a vacuum-tight manner,
**characterized in**
- **that** the element for the connecting of a vacuum pump is a closing valve with a valve body (10), which protrudes into the interior of the smooth-walled metal tube (9) which is welded to the same vacuum-tight and which is flush with the outer surface area of the same,
- **that** the valve body (10) has a threaded bore (10a) which is closed vacuum-tight by a screw plug (10b) during operating condition of the line pipe, and
- **that** the valve body (10) has threaded bores for the vacuum-tight connection of an adapter (12) by use of screw bolts which serves to the vacuum-tight connection of a gas lock (13), to which the a vacuum pump is connectable.

## Revendications

1. Tuyau de canalisation pour le transport de fluides cryogéniques, constitué d'au moins deux tubes métalliques (2, 4) ondulés et disposés concentriquement et à distance l'un de l'autre, qui renferment entre eux une fente annulaire dans laquelle est disposée une couche d'isolation (3) et qui est évacuée, dans lequel, dans le tube métallique extérieur (4), on soude de manière étanche au vide, un tube métallique (9) à paroi lisse, dans lequel est monté de manière étanche au vide un composant approprié pour être raccordé à une pompe à vide,
**caractérisé en ce que**
- le composant à raccorder à la pompe à vide est une soupape de fermeture comprenant un corps de soupape (10) qui pénètre dans l'espace interne du tube métallique (9) à paroi lisse, est soudé de manière étanche au vide à ce dernier et se termine en affleurement avec la surface d'enveloppe extérieure de ce dernier,
- le corps de soupape (10) présente un alésage fileté (10a) qui est fermé de manière étanche au vide dans l'état de fonctionnement du tuyau de canalisation, par une vis de fermeture (10b), et
- **en ce que** le corps de soupape (10) présente des alésages filetés pour le raccord étanche au vide d'un adaptateur (12) au moyen de boulons filetés, lequel sert au raccord étanche au vide d'une écluse à gaz (13) à laquelle on peut raccorder la pompe à vide.
